# EUROPÄISCHE PATENTANMELDUNG

(11) **EP 1 245 905 A2**
(43) Veröffentlichungstag der Anmeldung: **02.10.2002**
(21) Anmeldenummer: 02090121.1
(22) Anmeldetag: 26.03.2002
(51) Int. Cl.: F24D 3/10, F24D 19/10

(54) **Rohrset, bestehend aus mehreren Rohren, zur Verbindung von Anschl-ssen eines Mehrwegemischventiles**

(30) Priorität: 26.03.2001 DE 20105253 U
(71) Anmelder: HG Baunach GmbH & Co KG, 41836 Hückelhoven (DE)
(72) Erfinder: Baunach, Hans Georg, 52445 Titz (DE)
(74) Vertreter: Heim, Johann-Ludwig, Dipl.-Ing.

(57) **Zusammenfassung**

Rohrset ( 117 ), bestehend aus mehreren Rohren ( 28, 34, 39, 44, 45, 46, 47, 49, 28, 112, 113), zur Verbindung von Anschlüssen ( 1, 6, 7, 8, 9 ) eines Mehrwegemischventiles ( 40 ) nach Art eines Drehschiebers mit einem Ventilgehäuse ( 41 ) und wenigstens je einem Strömungsmittelein- ( 6, 7, 9 ) und -auslass (1, 8 ), die über ein im Gehäuse ( 41 ) gelagertes Ventilküken ( 16 ) verbindbar sind, wobei das Ventilgehäuse ( 41 ) Kreuzform aufweist und im Mittelpunkt ( 114 ) des Kreuzes und an allen Enden der mit Strömungsmittelkanälen versehenen Arme des Kreuzes die Ein- oder Auslässe ( 1, 6, 7, 8, 9 ) angeordnet sind, die mit Rohren einer Wärmequelle ( 56 ) und zweier Wärmesenken ( 57, 58 ) zu verbinden sind, welche Rohre in äquidistanten Abständen an einer Wand nebeneinander verlaufen.

## Beschreibung

Die vorliegende Erfindung bezieht sich auf ein Rohrset, bestehend aus mehreren Rohren, zur Verbindung von Anschlüssen eines Mehrwegemischventil gemäss dem einleitenden Teil des unabhängigen Patentanspruches.

Mehrwegemischventileinrichtungen mit zwei von je einem gesonderten mit einem Endschalter versehenen Stellmotor beherrschten Mischventilen zum Betreiben einer Umlaufwasserheizung sind bekanntgeworden aus der dem Anmelder zugehörigen DE 198 21 256 C1, bei der eine Wärmequelle mit ihrer Vorlauf- und Rücklaufleitung unmittelbar über eine Pumpe mit einer Wärmesenke und parallel hierzu über von der Vor- und Rücklaufleitung abgezweigte Parallelleitungen über die zwei Mischventile mit einer zweiten Wärmesenke über eine weitere Pumpe verbunden sind. Je nach Stellung der Mischventile sind folgende Betriebsweisen einstellbar: 1. Der Kreis der zweiten Wärmesenke wird unmittelbar vom Vorlauf der Wärmequelle gespeist, 2. dieser Kreis wird temperaturregelbar vom Vorlauf der Wärmequelle und vom Rücklauf der ersten Wärmesenke gespeist und 3. die zweite Wärmesenke wird ausschliesslich vom Rücklauf der ersten Wärmequelle versorgt. Um diese Funktion zu gewährleisten, sind die Stellmotoren der Mischventile durch die Endschalter in spezieller Weise verriegelt, was einen erheblichen schaltungstechnischen Aufwand bedingt. Alternativ ist die Zusammenfassung der beiden Mischventile zu einem einzigen Vierwegemischventil angedacht worden, ohne dass dessen Aufbau, Betriebsweise und die Verrohrung sowie deren Verbindungen beschrieben ist.

Der vorliegenden Erfindung liegt mithin die Aufgabe zugrunde, bei Einhaltung der Funktionen nach dem älteren Patent ein Rohrset für ein Mehrwegemischventil zu schaffen, das eine einfache Verbindung der Anschlüsse des Mehrwegemischventiles mit denen der Wärmequelle und der weiden Wärmesenken schafft.

Erfindungsgemäss wird diese Aufgabe bei einem Rohrset der eingangs näher bezeichneten Art erfindungsgemäss durch die kennzeichnenden Merkmale des unabhängigen Anspruches gelöst.

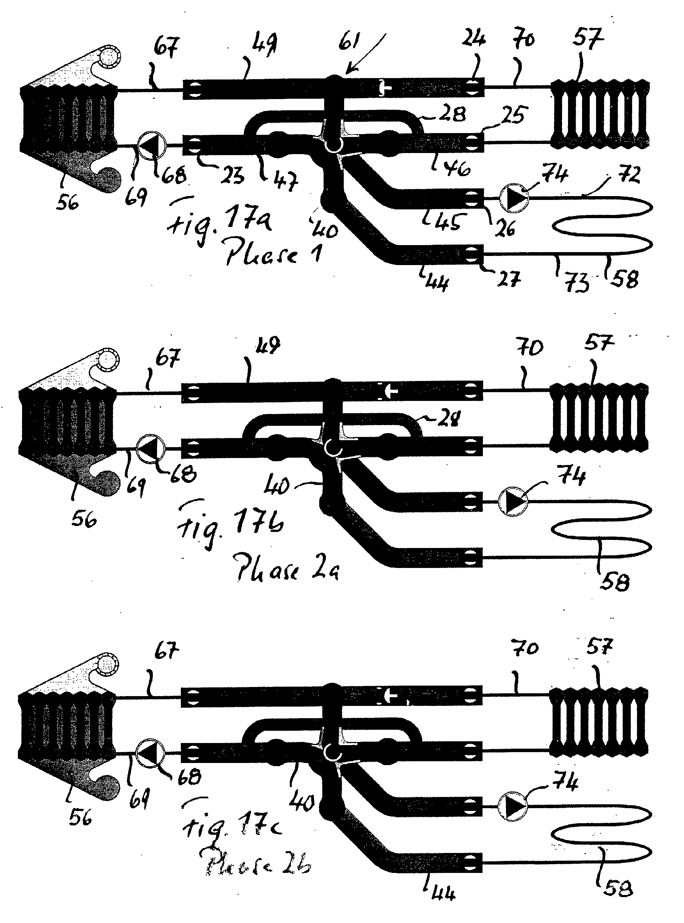

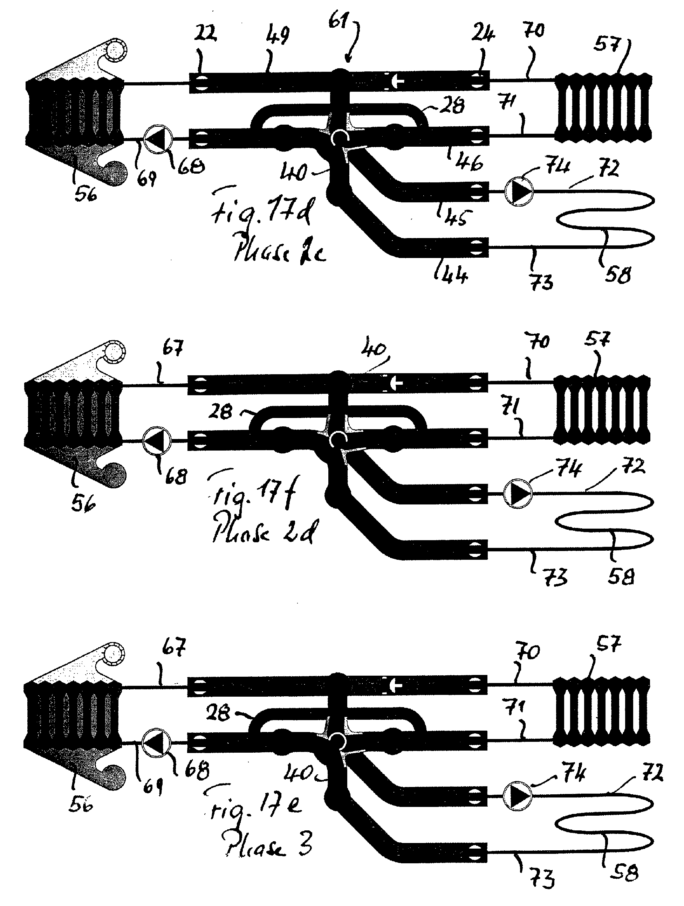

Weitere Ausgestaltungen und besonders vorteilhafte Weiterbildungen der Erfindung ergeben sich aus den Merkmalen der abhängigen Ansprüche. Ein Ausführungsbeispiel der Erfindung wird nachfolgend anhand der Figuren 1 bis 17f der Zeichnungen näher erläutert.

Es zeigen:
- Fig. 1: eine Gesamtdarstellung der Einzelteile des Mehrwegemischventiles,
- Fig. 2a: eine Frontansicht auf das fertig montierte Mehrwegemischventil,
- Fig. 2b: eine Seitenansicht auf das fertig montierte Mehrwegemischventil,
- Fig. 3: einen Anschluss des Mehrwegemischventiles an eine Wärmequelle und eine Wärmesenke,
- Fig. 4: einen Schnitt durch ein Ventilgehäuse des Mehrwegemischventiles,
- Fig. 5a - c: Schnitte entlang den angegebenen Linien durch das Ventilgehäuse des Mehrwegemischventiles,
- Fig. 6: einen weiteren Schnitt entlang der angegebenen Linie durch das Ventilgehäuse des Mehrwegemischventiles,
- Fig. 7: einen dritten Schnitt entlang der angegebenen Linie durch das Ventilgehäuse des Mehrwegemischventiles,
- Fig. 8: einen vierten Schnitt entlang der angegebenen Linie durch das Ventilgehäuse des Mehrwegemischventiles,
- Fig. 9: einen fünften Schnitt entlang der angegebenen Linie durch das Ventilgehäuse des Mehrwegemischventiles,
- Fig. 10a/c: eine Zusammenstellung des Ventilgehäuses des Mehrwegemischventiles mit einem Rohrset gemäss einer ersten Montagevariante,
- Fig. 10b/d: eine Zusammenstellung des Ventilgehäuses des Mehrwegemischventiles mit einem Rohrset gemäss einer zweiten Montagevariante,
- Fig. 11a: eine Zusammenstellung des Ventilgehäuses des Mehrwegemischventiles mit einem Rohrset sowie einer Pumpe gemäss der Montagevariante nach Fig. 10a,
- Fig. 11b: eine Zusammenstellung des Ventilgehäuses des Mehrwegemischventiles mit einem Rohrset sowie einer Pumpe gemäss der Montagevariante nach Fig. 10b,
- Fig. 11c: eine Zusammenstellung des Ventilgehäuses des Mehrwegemischventiles mit einem Rohrset sowie einer Pumpe gemäss der Montagevariante nach Fig. 10c,
- Fig. 11d: eine Zusammenstellung des Ventilgehäuses des Mehrwegemischventiles mit einem Rohrset sowie einer Pumpe gemäss der Montagevariante nach Fig. 10d,
- Fig. 12a - c: Schnitte entlang den angegebenen Linien durch das Ventilgehäuse des Mehrwegemischventiles,
- Fig. 13a - c: Schnitte entlang den angegebenen Linien durch das Ventilgehäuse des Mehrwegemischventiles mit der Pumpe,
- Fig. 14a - f: ein Rohr in Schnittdarstellungen,
- Fig. 15a - c: ein Rohr in Schnittdarstellungen,
- Fig. 16a - c: ein Rohr in Schnittdarstellungen
- Fig. 17a - f: Heizmittelströme von einer Wärmequelle zu zwei Wärmesenken.

In allen siebzehn Figuren bedeuten gleiche Bezugszeichen jeweils die gleichen Einzelheiten.

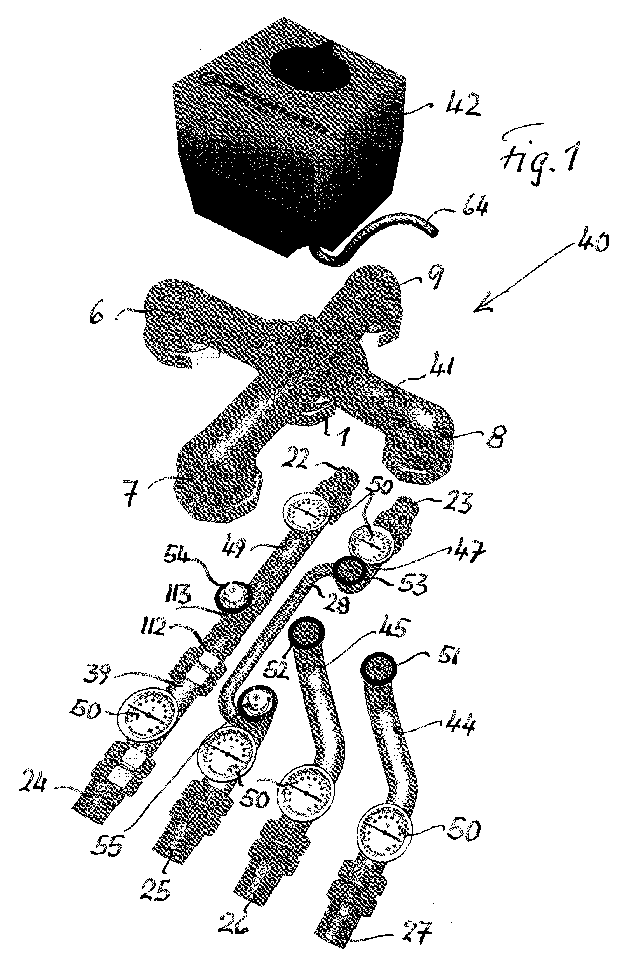

Ein vollständig funktionsfähiges Mehrwegemischventil 40 gemäss Figur 1 besteht aus den Baugruppen Ventilgehäuse 41, Stellmotor 42 und einem Rohrset 43 mit einzelnen Rohren 44 bis 49, wobei in einzelne dieser Rohre Thermometer 50 eingefügt sein können. Die einen Enden 51 bis 55 der Rohre 44 bis 47 und 49 führen zu Anschlüssen 6 bis 9 des Ventilgehäuses 41, die anderen Enden 22 und 23 zu einer Wärmequelle 56 bzw. die anderen Enden 24 bis 27 zu zwei von der Wärmequelle 56 zu speisenden Wärmesenken 57 und 58. Das verbleibende Rohr 48 verbindet mit seinen Enden 59 und 60 die Enden 53 und 55 der Rohre 46 und 47 miteinander. Das Gehäuse 41 des Mehrwegemischventiles 40 ist in Form eines Kreuzes mit zwei sich nahezu rechtwinklig kreuzenden Armen, die Strömungskanäle aufweisen und sich in einem Mittelpunkt 114 kreuzen, ausgebildet.

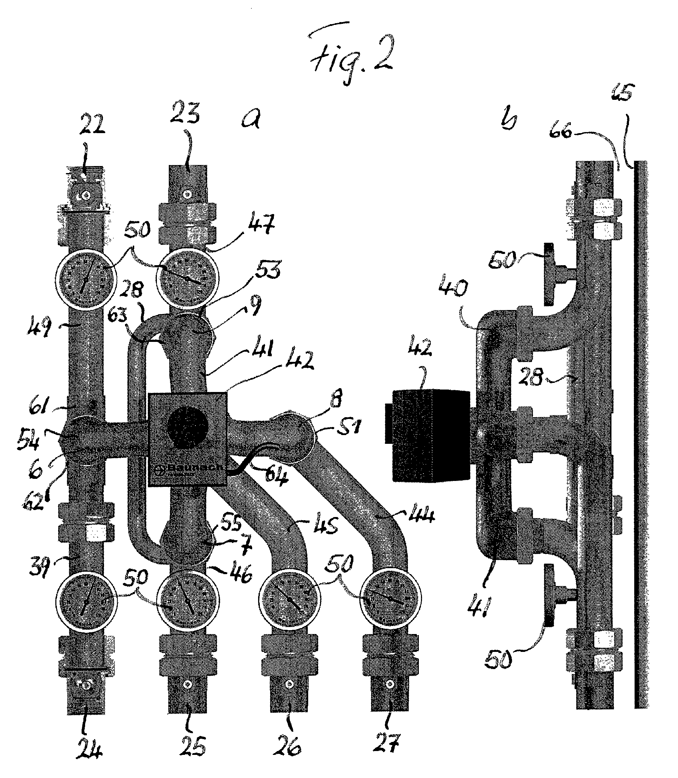

Aus der Darstellung der Figuren 2a und 2b geht die Art der Anordnung des Mehrwegemischventiles 40 näher hervor: Nach der Figur 2a sind vor einer Montagewand 65, in der Regel eine Hauswand im Inneren eines Wohngebäudes vier Rohre, nämlich die Rohre 44 bis 49 in etwa parallel zueinander verlegt und durch nicht dargestellte in die Wand eingreifende Halter befestigt. Die beiden von oben kommenden Rohre 47 und 49 sind die Vor- und Rücklaufleitung eines Umlaufwasserheizers, wobei das Rohr 49 den Vorlauf bildet. Von diesem Rohr zweigt in einem T-Stück 61 ein Anschluss 62 zum Ende 54 ab, das mittels einer Überwurfschraubverbindung 63 mit dem Anschluss 6 des Gehäuses 41 verbunden ist, während sich das Rohr selbst zum Ende 24 fortsetzt, an dem ein Rückflussverhinderer 29 eingefügt ist und das als Vorlaufleitung zu einer direkt vom Vorlauf der Wärmequelle 56 gespeisten ersten Wärmesenke 57 führt. Das Rohr 47 ist unmittelbar mit dem Ende 53 über eine Überwurfverschraubung 63 mit dem Anschluss 8 des Mehrwegemischventiles 40 verbunden. Am Ende 53 zweigt vom Rohr 47 ein U-Rohr 28 ab, das zum Rohr 46 führt, welches mit seinem Ende 55 mit dem Anschluss 7 des Mehrwegemischventiles 40 verbunden ist. Das Rohr 28 überbrückt mithin das Mehrwegemischventil 40 bezüglich seiner Anschlüsse 7 und 8. Von dem in der Figur 1 sichtbaren Anschluss 1 des Gehäuses 41 des Mehrwegemischventiles 40 führt das Rohr 45 über ein Thermometer 50 zum Ende 26 und zu einem mischergesteuerten Wärmesenkenkreis der nicht direkt von der Wärmequelle 56 gespeisten zweiten Wärmesenke 58. Der Anschluss 8 des Gehäuses 41 des Mehrwegemischventiles 40 ist mit dem Ende 51 des Rohres 44 verbunden, dass über ein Thermometer 50 mit dem Rücklauf der zweiten Wärmesenke verbunden ist. Ein Kabel 64 dient der Stromzufuhr zum Stellmotor 42 des Mehrwegemischventiles 40. Die Anordnung nach Figur 2a lässt gut erkennen, dass alle Rohre distanziert von einander angeordnet sind und dass das Mehrwegemischventil alle Rohre bis auf das Rohr 45 von vorn übergreift, während die Figur 2b erkennen lässt, dass alle Rohre äquidistant in einem Abstand 66 vor der Montagewand 65 entfernt sind also in einer senkrechten Ebene liegen, während die Ebene der Anschlüsse 1, 6 bis 9 hierzu parallel und im Abstand liegt.

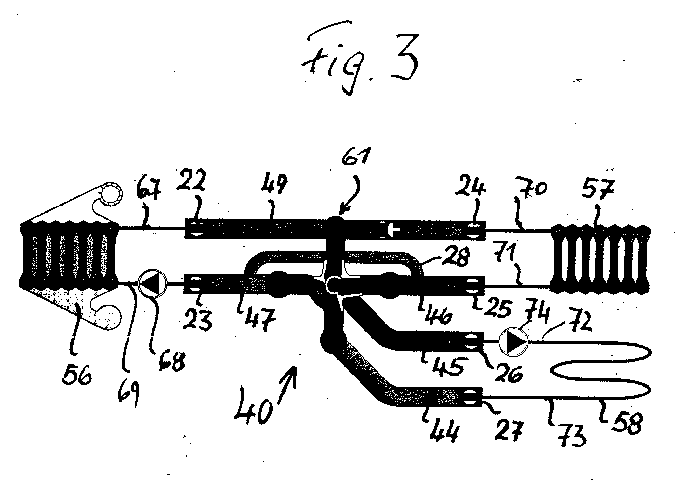

Die Figur 3 lässt die hydraulische Verschaltung der Elemente der Heizungsanlage erkennen: So ist das Mehrwegemischventil 40 mit der als Kessel ausgestalteten Wärmequelle 56 über eine Vorlaufleitung 67, die an das Ende 22 geführt ist und über eine mit einer Pumpe 68 versehene Rücklaufleitung 69 verbunden, während die Enden 24 und 25 über Leitungen 70 und 71 mit der ersten aus Radiatoren bestehenden Wärmesenke 57 und die Enden 26 und 27 über Leitungen 72 und 73, von denen eine mit einer weiteren Pumpe 74 versehen ist, mit einer zweiten Wärmesenke 58, die als Fussbodenheizungsrohrschlange(n) ausgebildet ist, verbunden sind.

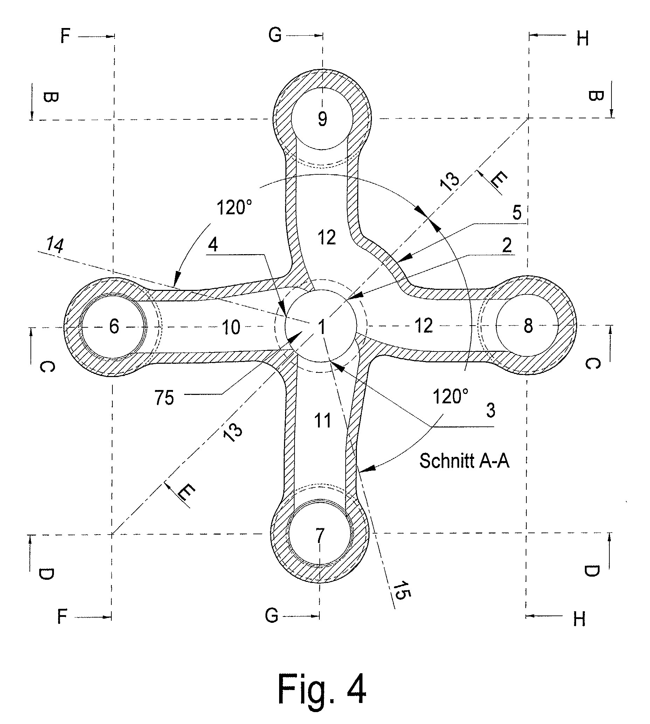

Die Figur 4 zeigt den Verlauf von Kanälen in den Armen des Kreuzes zu den Anschlüssen im Gehäuse 41 des Mehrwegemischventiles 40. Das Gehäuse 41 des Mehrwegemischventiles 40 ist als Kreuz mit zwei nahezu senkrecht zueinander stehenden Armen gestaltet, an deren Enden die Anschlüsse 6 bis 9 an der Peripherie liegen. Den Mittelpunkt 114 bildet eine Kükenbohrung 75, die mit dem Anschluss 1 und Kanälen 10, 11 und 12 hydraulisch verbunden ist, wobei der Kanal 10 mit dem Anschluss 6, der Kanal 11 mit dem Anschluss 7, der Kanal 12 mit dem Anschluss 8 und ein weiterer Kanal 12, der mit dem erstgenannten Kanal 12 eine durchgehenden Verbindung über einen Bauch 5 als Bypass 115 bildet, mit dem Anschluss 9 verbunden ist. An der Kükenbohrung 75 sind Zugangstore 2, 3 und 4 vorgesehen, wobei das Zugangstor 2 mit beiden Kanälen 12, das Zugangstor 3 mit dem Kanal 11 und das Zugangstor 4 mit dem Kanal 10 verbunden ist. Eine Symmetrieebene 13 geht mittig durch das Zugangstor 2. Die Mitten der Zugangstore 3 und 4 liegen jeweils auf Achsen 14 und 15, die einen Winkel von 120° zur Symmetrieachse 13 bilden. Sämtliche Armen mit ihren Strömungskanälen liegen in einer im Abstand zu der Wand 65 angeordneten Ebene; in einer dazu parallel vorgesehen weiteren Ebene liegen die Enden der Anschlüsse.

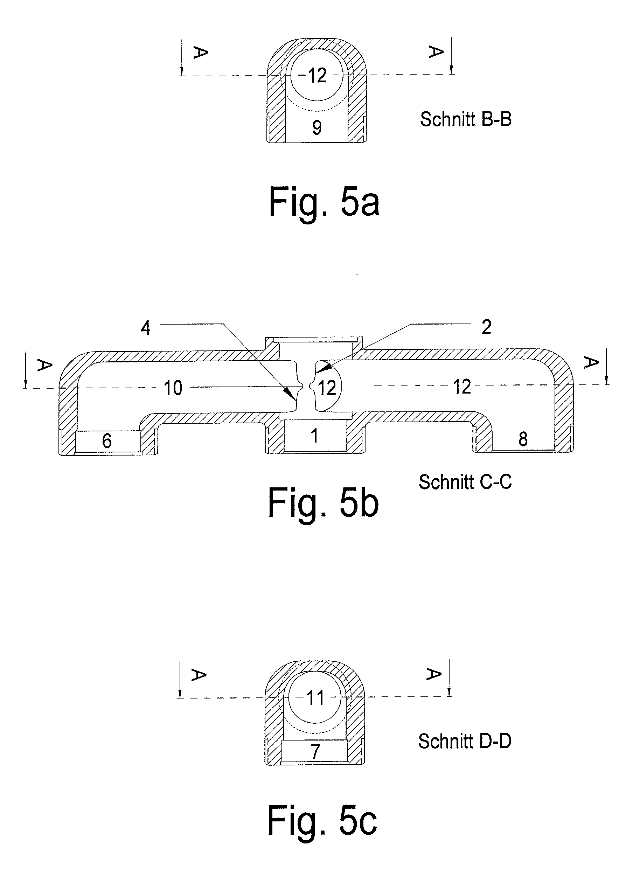

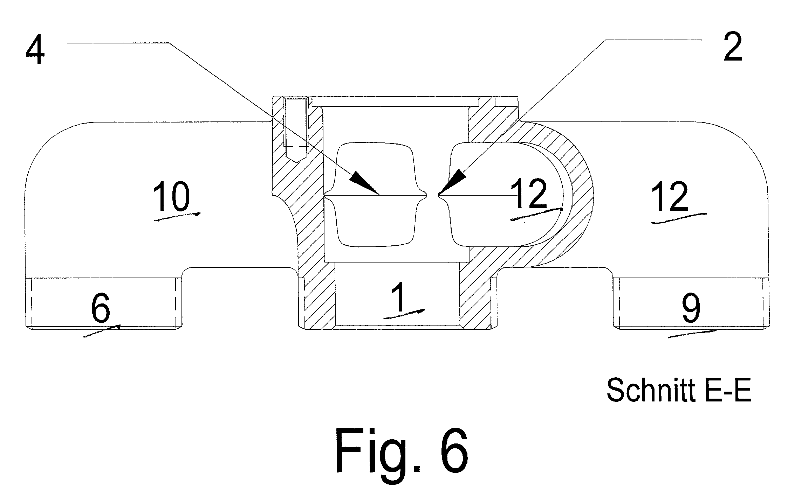

Der Schnitt B-B gemäss Figur 5a zeigt den Verlauf des Anschlusses 9 zum Kanal 12. Der Schnitt C-C gemäss Figur 5b zeigt den Verlauf der Kanäle 10 und 12 im Gehäuse 41 des Mehrwegemischventiles 40 von den Anschlüssen 6 und 8 zum Anschluss 1 bzw. der Kükenbohrung 75 ohne eingesetztes Küken. Der Schnitt D-D gemäss Figur 5c zeigt den Verlauf des Anschlusses 7 zum Kanal 11. Der Schnitt E-E gemäss der Figur 6 zeigt den Verlauf der Kanäle 10 und 12 im Gehäuse 41 des Mehrwegemischventiles 40 von den Anschlüssen 6 und 9 zum Anschluss 1 bzw. der Kükenbohrung 75 ohne eingesetztes Küken, wobei das Zugangstor 4 sichtbar ist.

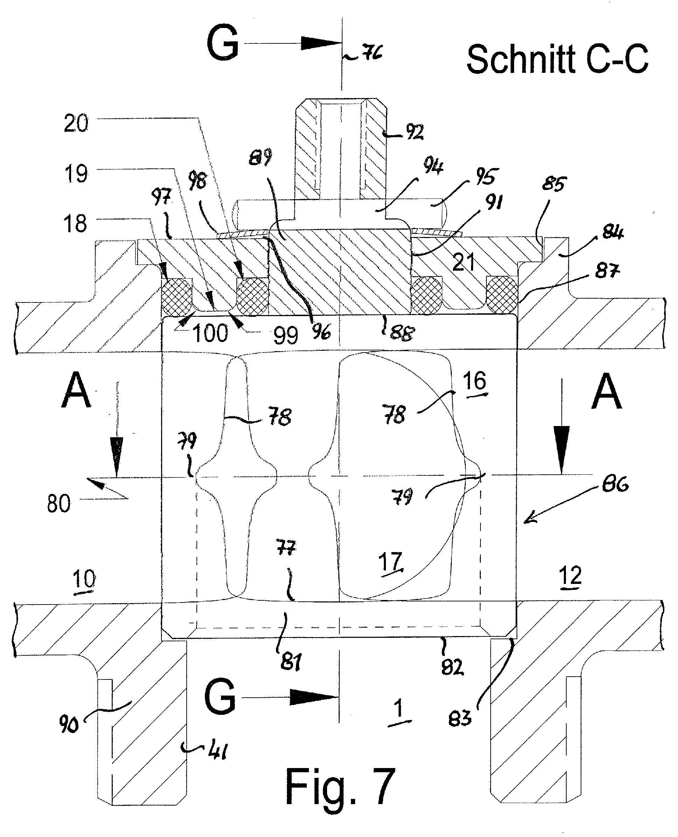

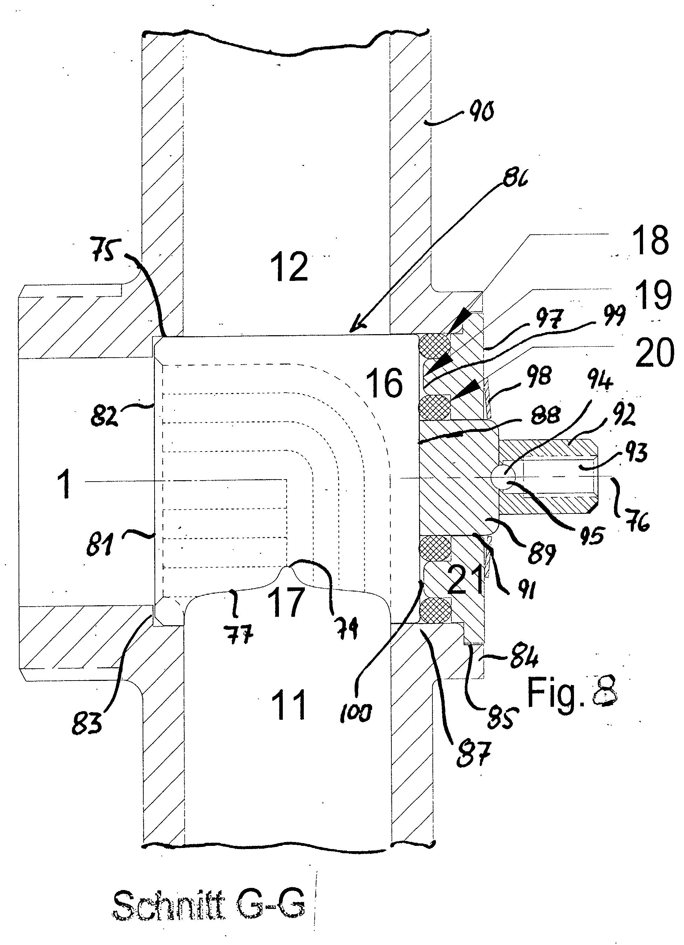

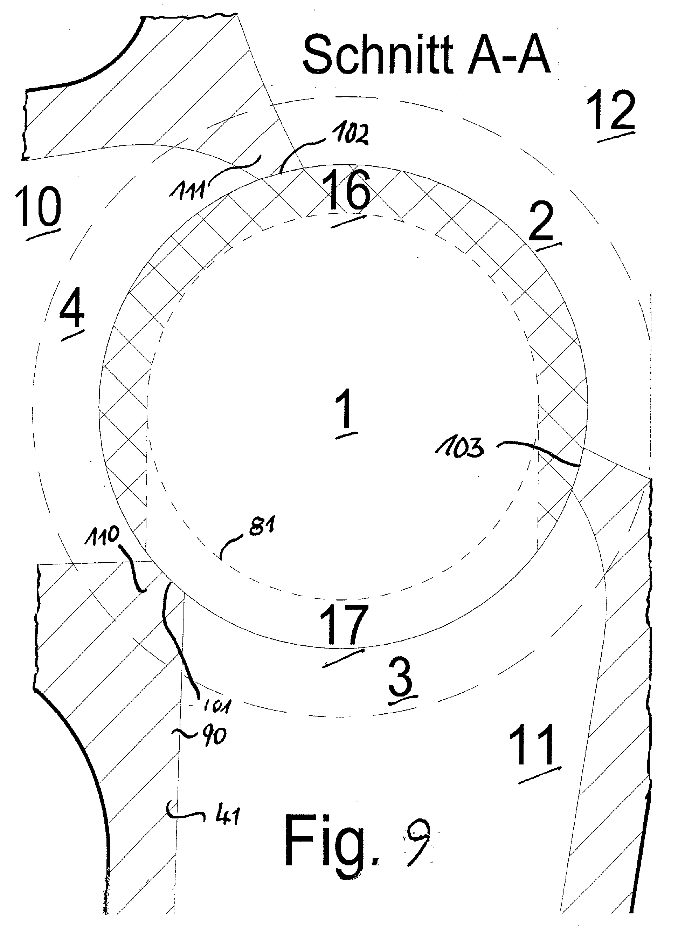

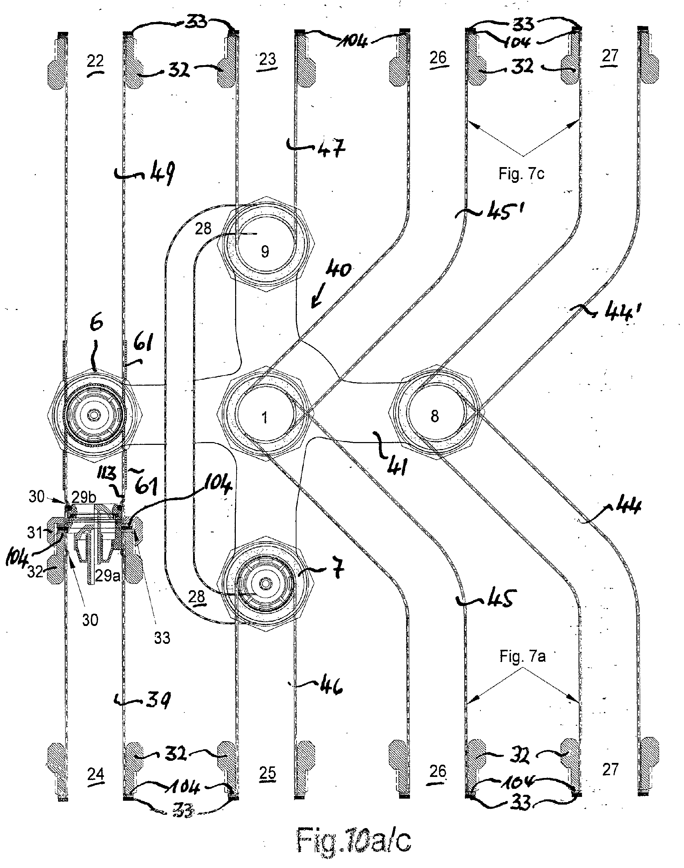

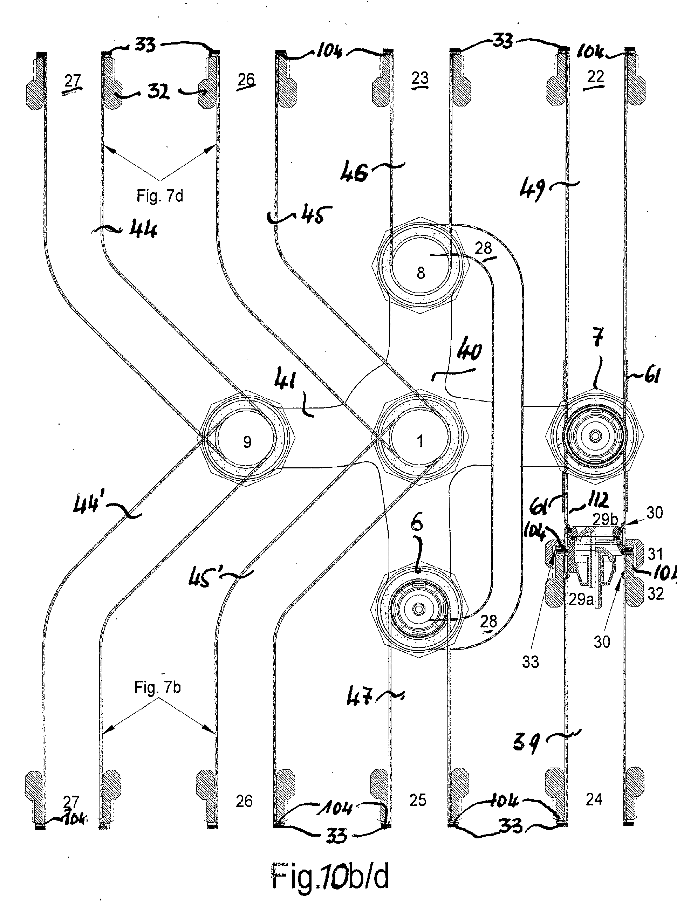

Die Figur 7 stellt das Zentrum des Gehäuses 41 des Mehrwegemischventiles 40 mit einem in die Kükenbohrung 75 eingesetzten Küken 16 dar, das einen einzigen radialen dem Kanal 11 zugewandten Einlass 17 aufweist, dessen Kontur 77 rechteckartig ausgeformt ist, wobei die sich in Richtung der Kükendrehachse 76 erstreckenden Seiten 78 des Rechteckes glockenartig geformt sind wobei sich die Spitze 79 der Glocke auf einer Mittelachse 80 der Kanäle 10 und 12 befindet. Das Küken 16 weist ferner einen einzigen axialen Auslass 81 auf, der dem Anschluss 1 zugewandt ist. Auf der dem axialen Auslass zugewandten Stirnseite 82 ist das hohlzylinderförmig gestaltete Küken 16 in einer Stufe 83 im Anschluss 1 radial und in einem Deckel axial gelagert.

Auf der dem Anschluss 1 gegenüberliegenden Seite 84 des Gehäuses 41 des Mehrwegeventiles 40 befindet sich in Fortsetzung der Kükenbohrung 75 eine Stufenbohrung 85, in derem engeren, dem Kükenaufnahmeraum 86 zugewandten Bereich 87 sich ein äusserer O-Ring 18 befindet. Das Küken 16 weist auf der der Stirnseite 82 gegenüberliegenden Stirnseite 88 einen Fortsatz 89 auf, der sich nach aussen durch die Wandung 90 des Gehäuses 41 erstreckt und dessen Durchmesser erheblich kleiner gehalten ist als der des Kükenaussendurchmessers. Auf seinem Zylindermantel 91 und an der Stirnseite 88 ruht ein innerer O-Ring 20. Zwischen beiden O-Ringen 18 und 20 greift ein Zylinderringfortsatz 19 des Deckels 21, der mit beiden O-Ringen in Berührung steht und die Küken- und Stufenbohrung 75/85 hydraulisch verschliesst, ein. Auf der dem Küken 16 abgewandten Seite verjüngt sich der Fortsatz 89 zu einem Betätigungsstift 92, der ein axiales Betätigungsinnengewinde 93 und ein Querloch 94 aufweist, das einen Querstift 95 lagert. In einem Spalt 96 zwischen Querstift 95 und der dem Zylinderfortsatz 19 abgewandten Seite 97 des Deckels 21 ist eine Kegelfederscheibe 98 gelagert, welche das Küken 16 mit seiner Stirnseite 88 in Richtung auf die Stirnfläche 99 des Zylinderfortsatzes 19 vorspannt, ohne diese jedoch zu berühren. Axial begrenzt durch die Stirnseite 88 und die Stirnflache 99 und radial begrenzt durch die O-Ringe 18 und 20 entsteht ein Ringraum 100, der mit Fett gefüllt ist und eine Varionut formt. In das axiale Betätigungsinnengewinde 93 greift ein Aussenzylindergewindestift des Stellmotors 42 zur Verstellung der Drehlage des Kükens 16 ein.

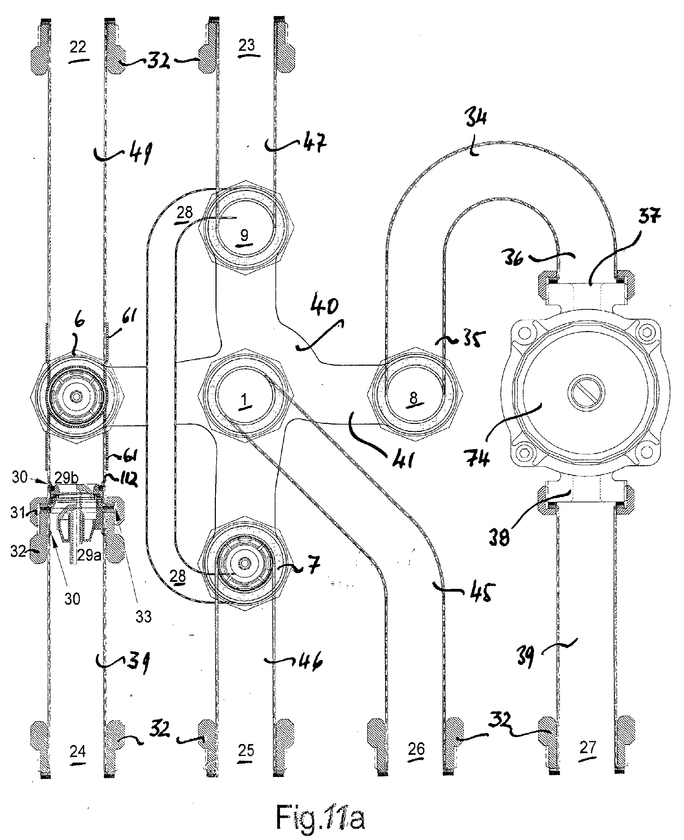

Die Figur 8 zeigt bei gleicher Stellung des Kükens 16, mit seinem radialen Einlass 17 dem Kanal 11 zugewandt, eine andere Ansicht, um die Lage des Kükens 16 im Kükenaufnahmeraum 86 zu verdeutlichen.

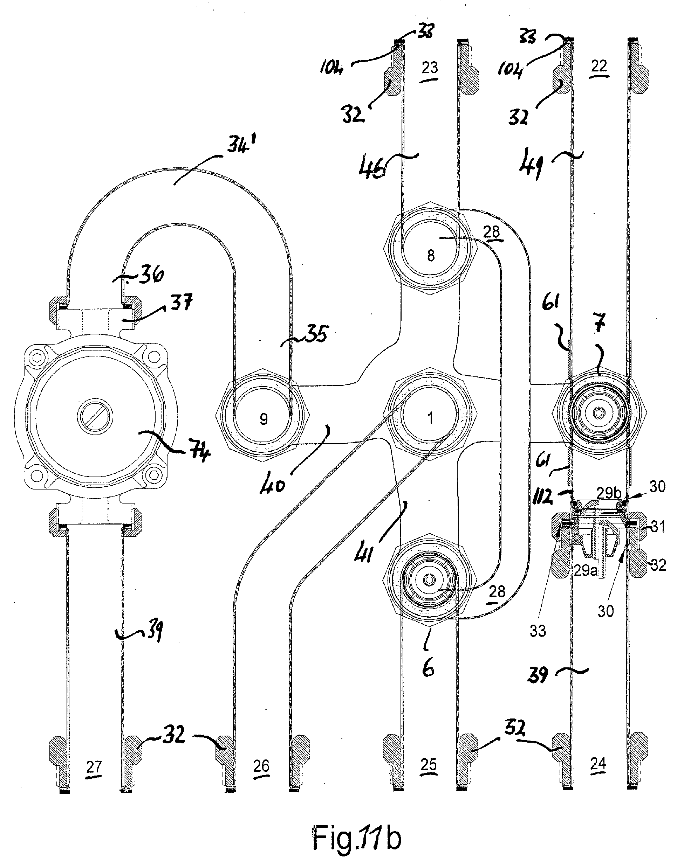

In der Figur 9 ist die Lage der Kanäle 10, 11 und 12 zum Küken 16 mit seinem radialen Einlass 17 und die Zuordnung des axialen Auslasses 81 zum Anschluss 1 ersichtlich, wobei letztere permanent und in jeder Stellung des Kükens im Gehäuse 41 fluchten. Während die Gehäusewandung 90 im Bereich des Aneinanderstossens der Zugangstore 3 und 4 mit ihren Kanälen 10 und 11 eine mit der Zylinderkrümmung des Kükens 16 übereinstimmende Teilzylindermantelfläche 101 bildet, deren Mittellinie senkrecht zum Kükenmantel steht, ist die Berührungsfläche 102 der Gehäusewand 90 im Bereich des Aneinanderstossens der Zugangstore 2 und 4 mit Ihren Kanälen 10 und 12 tangential von der Fläche 101 wegweisend ausgestaltet.

Das Gleiche gilt für die Berührungsfläche 103 der Gehäusewand 90 im Bereich des Aneinanderstossens der Zugangstore 2 und 3 mit ihren Kanälen 11 und 12, die gleichfalls tangential von der Fläche 101 wegweisend ausgestaltet ist. Somit weisen die Vorsprünge 110 und 111, die die teilzylindermantelförmigen Berührungsflächen 102 und 103 der Gehäusewandung 90 formen, einen spitzen Winkel zueinander auf, so dass ihren Verbindung eine Sehne zum Querschnitt des Kükens 16 bildet.

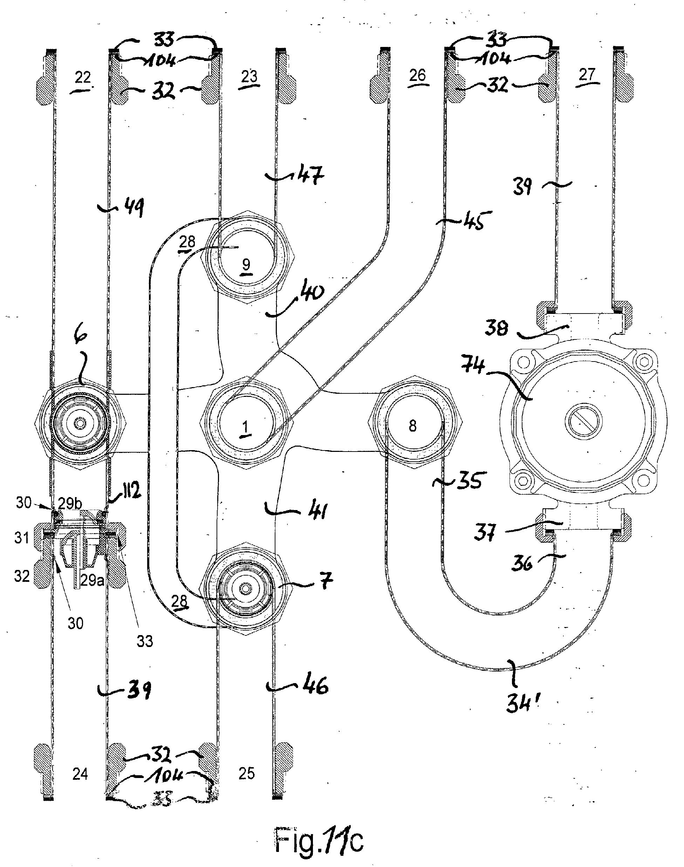

Die Figuren 10a/c verdeutlichen zwei alternative Möglichkeiten der Lagen der Rohre 44 bis 49 von der Wand 65 her gesehen. So sind die zur Wärmequelle 56 führenden Rohre 47 und 49 linksliegend und nach oben führend angeordnet, wie dies für eine als Umlaufwasserheizer ausgeführte Wärmequelle eines bestimmten Herstellers zweckmässig ist. Die Rohre 46 und 49, die zu der temperaturmässig vom Mehrwegemischventil unbeeinflussten ersten Wärmesenke 57 führen, verlaufen linksliegend zu den Rohren 47 und 49 fluchtend, nach unten. Die Enden 26 und 27, die zur der temperaturmässig vom Mehrwegemischventil beeinflussten zweiten Wärmesenke 58 führen, verlaufen rechtsliegend zu den Rohren 47 und 49 äquidistant ausgerichtet, nach unten im Falle der Ausführung nach Figur 10a. Das Rohr 47 ist mit dem Anschluss 8, das Rohr 44 ist mit dem Anschluss 9 des Mehrwegeventiles verbunden. Im Falle der Ausführung nach Figur 10c verlaufen sie rechtsliegend zu den Rohren 47 und 49 äquidistant ausgerichtet, nach oben. Die Lage des u-förmigen Rohres 28 verbleibt hiervon unberührt. Es ist ersichtlich, dass in die Verbindungsstellen der Rohre 46 und 49 mit dem Anschluss 7 bzw. der Verbindungsstelle des T-Stückes 61 mit dem weiterführenden Rohr 49 je ein Rückflussverhinderer 29 eingefügt ist. Zu diesem Zweck ist in das jeweilige Rohr 49 eine Aussenringnut 30 eingebracht worden. Das Ende des Rohres weist einen Kragen 104 auf, der von einer Überwurfmutter 31 hintergriffen ist. Dies ist bei allen Anschlüssen 1, 6, 7, 8, und 9 gleich ausgeführt. Das nachfolgende Rohrstück des Rohres 49 weist eine gleiche Aussenringnut 30 auf, zwischen beiden Aussenringnuten 30 ist der Rückflussverhinderer 29 axial unverschieblich im Rohr 49 geführt, gelagert.

Die Figuren 10b/d verdeutlichen zwei weitere alternative Möglichkeiten der Lagen der Rohre 44 bis 49 von der Wand 65 her gesehen. So sind die zur Wärmequelle 56 führenden Rohre 47 und 49 rechtsliegend und nach oben führend angeordnet, wie dies für eine als Umlaufwasserheizer ausgeführte Wärmequelle eines anderen bestimmten Herstellers zweckmässig ist. Die Rohre 46 und 49, die zur der temperaturmässig vom Mehrwegemischventil unbeeinflussten ersten Wärmesenke 57 führen, verlaufen rechtsliegend und zu den Rohren 47 und 49 fluchtend, nach unten. Die Enden 26 und 27, die zur der temperaturmässig vom Mehrwegemischventil beeinflussten zweiten Wärmesenke 58 führen, verlaufen linksliegend zu den Rohren 47 und 49 äquidistant ausgerichtet, nach unten im Falle der Ausführung nach Figur 10b. Das Rohr 47 ist mit dem Anschluss 8, das Rohr 44 ist mit dem Anschluss 9 des Mehrwegeventiles verbunden.

Im Falle der Ausführung nach Figur 10d verlaufen sie linksliegend zu den Rohren 47 und 49 äquidistant ausgerichtet, nach oben. Die Lage des u-förmigen Rohres 28 verbleibt hiervon unberührt. Wesentlich für alle der Ausführungen nach einer der Figuren 10a bis 10d ist die Tatsache, dass das vom Rückflussverhinderer 29 weiterführende Teil des Rohres 49 mit einem Kragen 104 versehen ist, der unter Zwischenlage einer Dichtung 33 an dem gegenüberliegenden Kragen 104 axial fluchtend anliegt, wobei auf das dem T-Stück 61 zugewandten Ende des weiterführenden Teiles des Rohres 49 eine Überwurfschraube 32 gesteckt ist, die in die Überwurfmutter 31 eingreift. An zwei Auslässen des T-Stückes 61 befinden sich baugleiche gerade Kurzrohre 112 bzw. 113. Beim Wechsel der Verschaltung der Rohre vom Ausführungsbeispiel nach den Figuren 10a /c auf das der Figuren 10 b/d wird das Gehäuse 41 um 90° gedreht, so dass sich die Anschlüsse 8 und 9 bzw. 6 und 7 vertauschen.

Im Falle der Ausführung der Verschaltung der Rohre und des Mehrwegemischventiles 40 nach Figur 11a entspricht die Lage der Rohre in etwa der nach der Ausführung gemäss Fig. 10a. Lediglich das Rohr 44 ist entfallen und durch ein u-förmiges Rohr 34 ersetzt, dessen eines Ende 35 mit dem Anschluss 8 und dessen anderes Ende 36 mit einem Überdruckstutzen 37 der Pumpe 74 verbunden ist, die dann - anders als beim Ausführungsbeispiel nach Fig. 3 - nun rücklaufseitig zur zweiten Wärmesenke 58 geschaltet ist. Von einem Unterdruckstutzen 38 der Pumpe 74 führt ein gerades Rohrstück 39 zum Ende 27. Beim Ausführungsbeispiel nach Fig. 11b ist die Pumpe nicht linksseitig - wie beim Ausführungsbeispiel nach Figur 11a - sondern rechtsseitig liegend unter Verwendung des gleichen Rohres 34 aber in gedrehter Lage - angeordnet, wobei das Ende 35 des Rohres 34 am Anschluss 8 des Mehrwegeventiles 40 liegt, entspricht also etwa in der Lage der Rohre dem Ausbildungsbeispiel nach Figur 10b.

Im Falle der Ausführung der Verschaltung der Rohre 45 bis 49 und des Mehrwegemischventiles 40 nach Figur 11c entspricht die Lage der Rohre in etwa der nach der Ausführung gemäss Fig. 10c. Lediglich das Rohr 44 ist entfallen und wieder durch das u-förmige Rohr 34 ersetzt, dessen eines Ende 35 mit dem Anschluss 8 und dessen anderes Ende 36 mit einem Überdruckstutzen 37 der Pumpe 74 verbunden ist, die dann - wie beim Ausführungsbeispiel nach Fig. 10c - rücklaufseitig zur zweiten Wärmesenke 58 geschaltet ist. Von einem Unterdruckstutzen 38 der Pumpe 74 führt ein gerades Rohrstück 39 zum Ende 27.

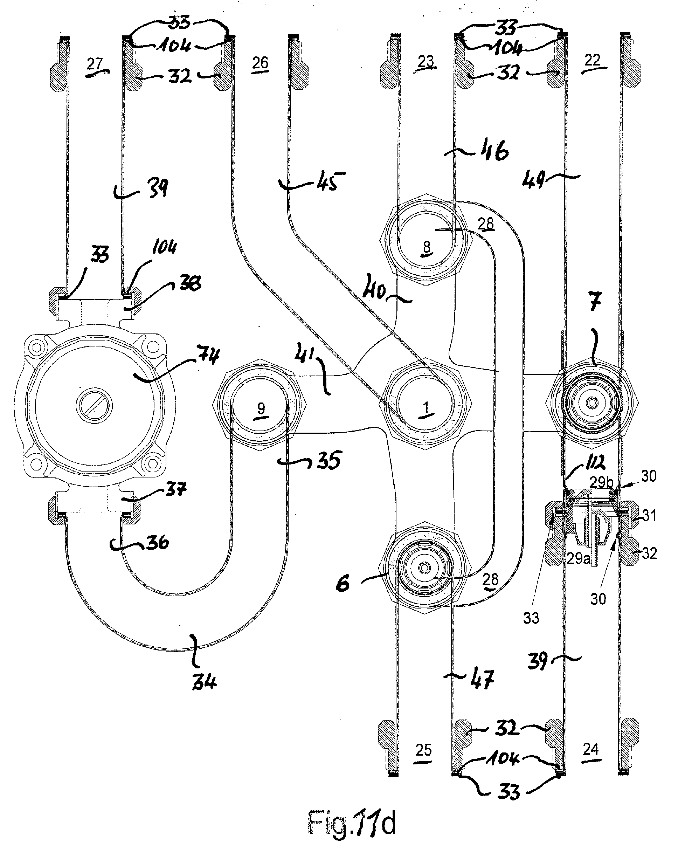

Beim Ausführungsbeispiel nach Fig. 11d ist die Pumpe 74 nicht rechtsseitig - wie beim Ausführungsbeispiel nach Figur 11c - sondern linkssseitig liegend unter Verwendung des gleichen Rohres 34 aber in gedrehter Lage - angeordnet, entspricht also etwa in der Lage der Rohre dem Ausbildungsbeispiel nach Figur 10d.

Im Falle der Ausführung der Verschaltung der Rohre 45 bis 49 und des Mehrwegemischventiles 40 nach Figur 11d entspricht die Lage der Rohre in etwa der nach der Ausführung gemäss Fig. 10d. Das Rohr 44 ist wieder entfallen und durch das u-förmige Rohr 34 ersetzt, dessen eines Ende 35 mit dem Anschluss 9 und dessen anderes Ende 36 mit einem Unterdruckstutzen 37 der Pumpe 74 verbunden ist, die dann - wie beim Ausführungsbeispiel nach Fig. 10d - rücklaufseitig zur zweiten Wärmesenke 58 geschaltet ist. Von einem Druckstutzen 38 der Pumpe 74 führt ein gerades Rohrstück 39 zum Ende 27.

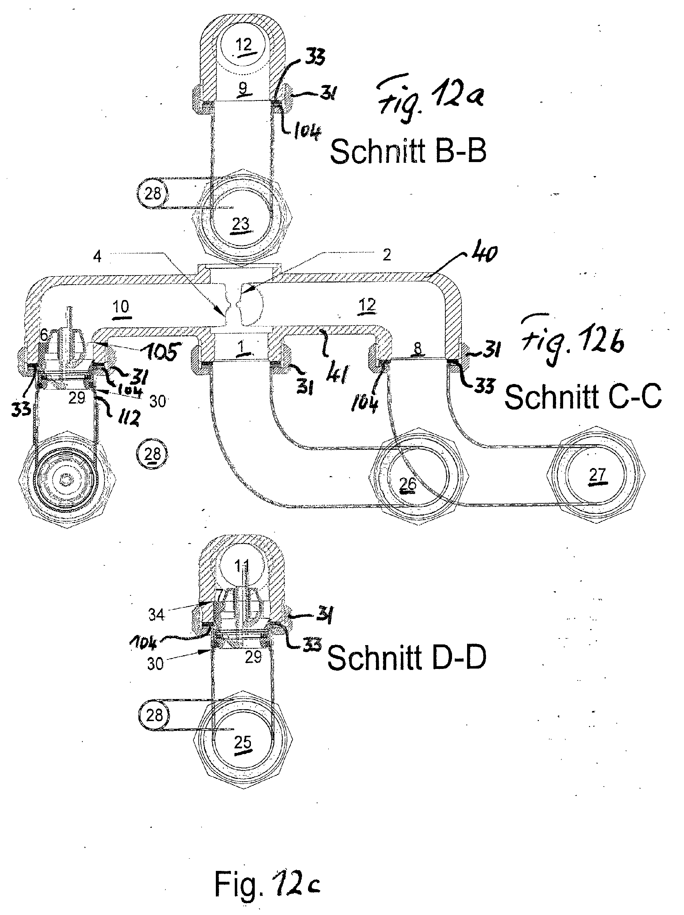

Die Figuren 12a bis 12c stellen zur weiteren Verdeutlichung der Lagen der Rohre und der Kanäle des Gehäuses 41 des Mehrwegemischventiles 40 Schnitte entlang den Ebenen B-B, C-C und D-D dar. Hierbei wird klar, dass auch im Anschluss 6 des Gehäuses 41 ein weiterer Rückflussverhinderer 29 eingefügt ist, wozu dieser eine Stufe 105 besitzt. Diese Darstellung entspricht in etwa der der Figuren 10a bis 10d.

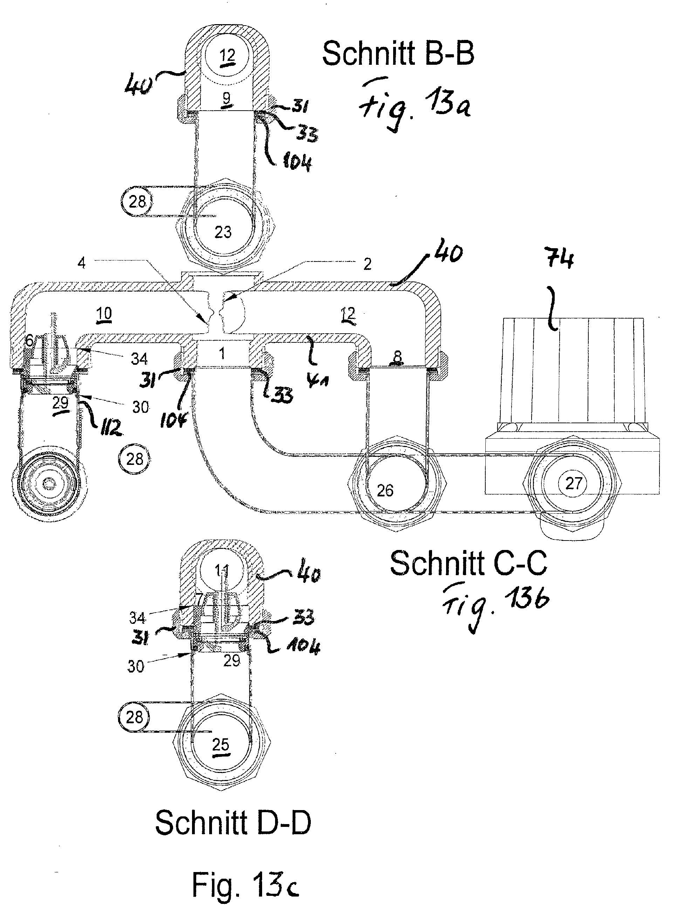

Die Figuren 13a bis 13c stellen zur weiteren Verdeutlichung der Lagen der Rohre und der Kanäle des Gehäuses 41 des Mehrwegemischventiles 40 Schnitte entlang den Ebenen B-B, C-C und D-D dar. Hierbei wird klar, dass auch hier im Anschluss 6 des Gehäuses 41 ein weiterer Rückflussverhinderer 29 eingefügt ist, wozu dieser eine Stufe 105 besitzt. Diese Darstellung entspricht in etwa der der Figuren 11a bis 11d.

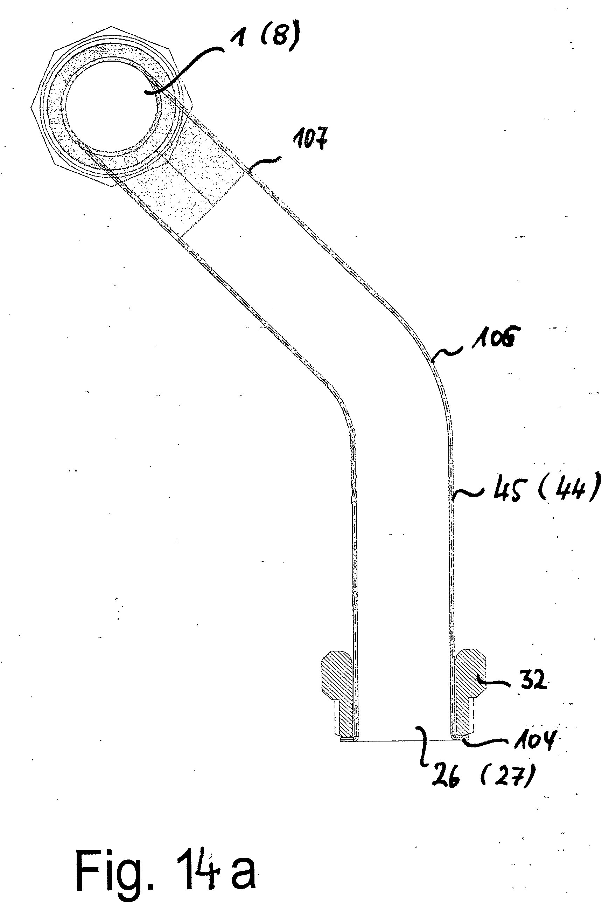

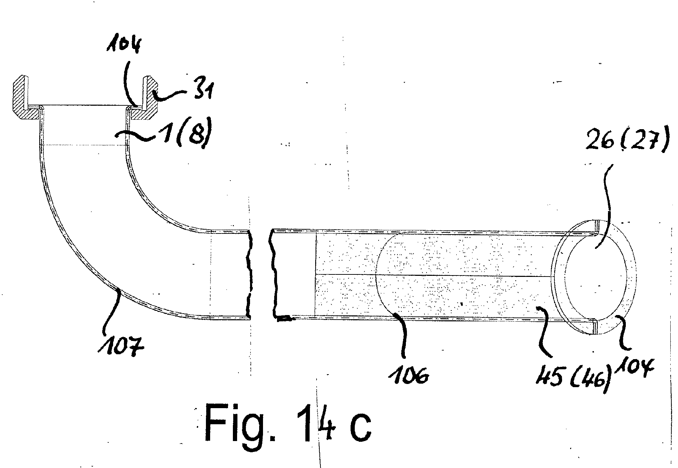

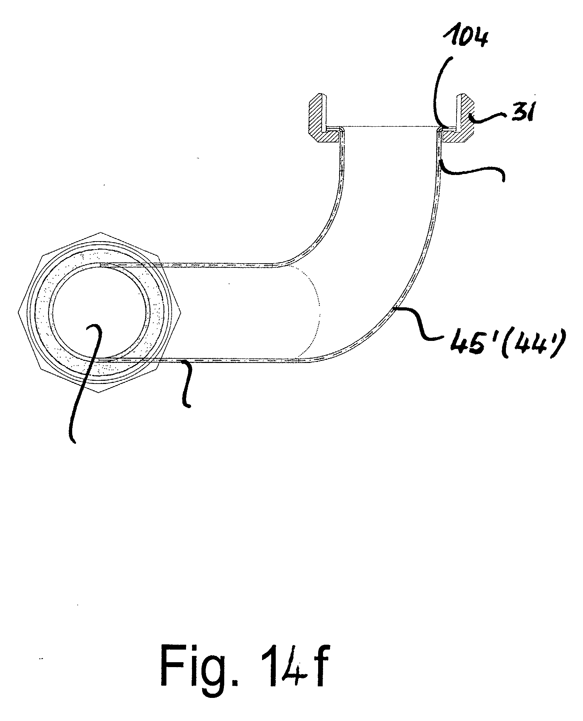

Die Figuren 14a bis 16f stellen die Gestaltung einzelner Rohre dar Das Rohr nach Fig. 14a ist das Rohr 45 (bzw., weil baugleich, das Rohr 44), das vom Ende 26 zu einer Biegung 106 in einer Ebene verläuft und im Abstand von der Biegung 106 eine weitere Biegung 107 aus der Zeichenebene heraus vollführt ehe sein anderes Ende zum Anschluss 1 des Gehäuses 41 des Mehrwegemischventiles 40 führt. Im Falle des Rohres 44 handelt es sich um das Ende 27 und den Anschluss 8.

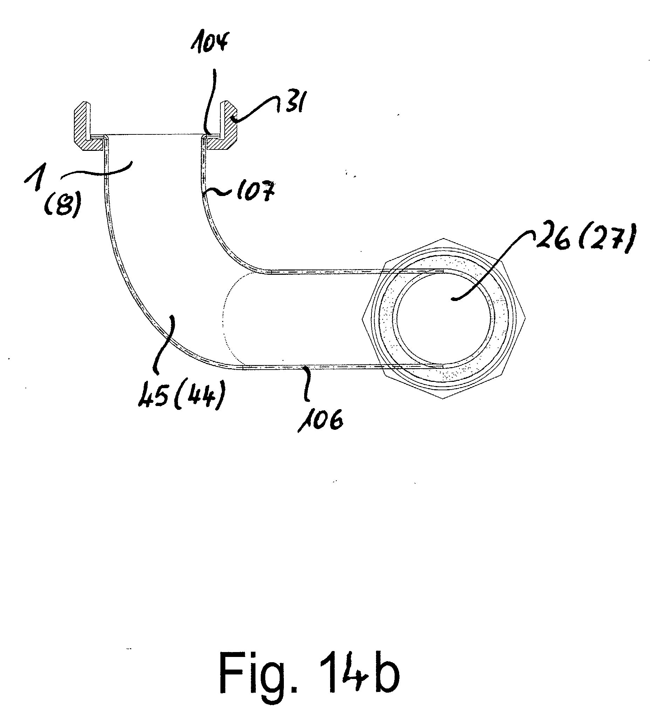

Die Fig. 14b zeigt das Rohr gemäss Fig. 14a in einer anderen Ansicht.

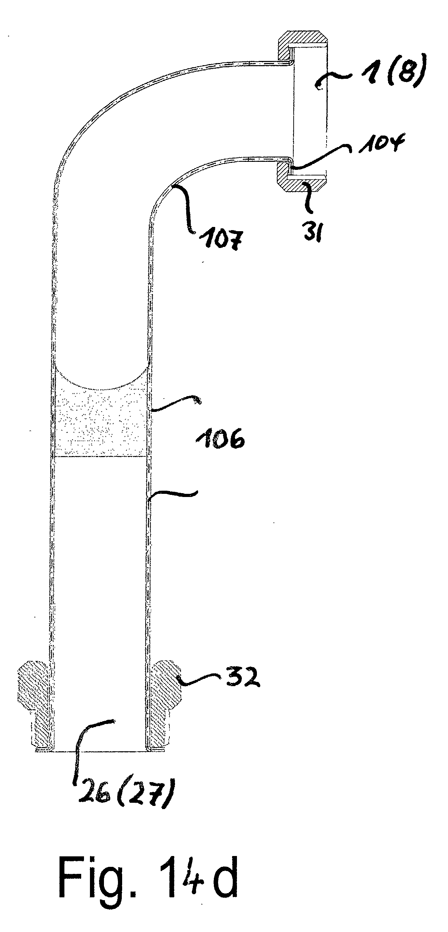

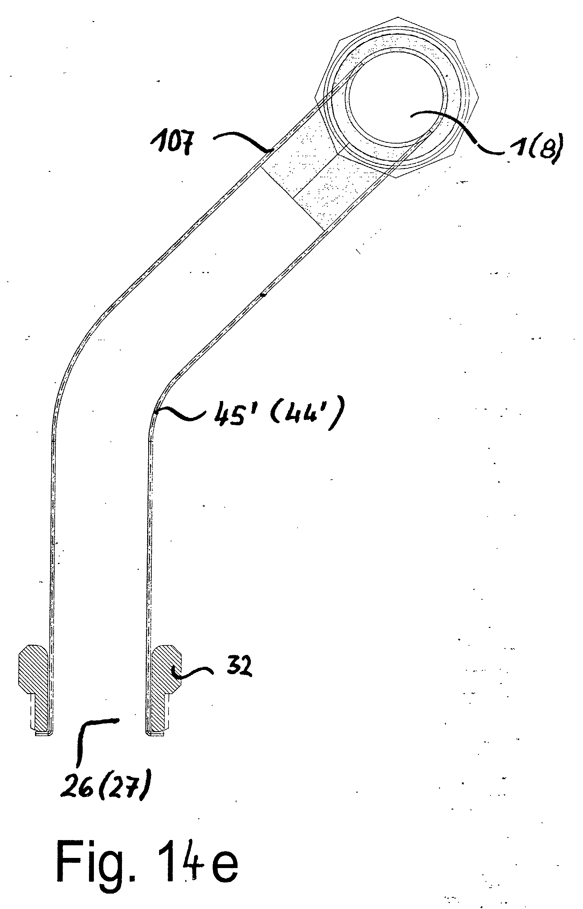

Die Rohre nach Fig. 14c und d stellen das gleiche Rohr 45 bzw. 44 in anderen Ansichten dar. Beim Rohr nach den Fig. 14e und f handelt es sich um das Rohr 45' bzw. 44', das jeweils zu dem Rohr 44 oder 45 gespiegelt gekrümmt ist.

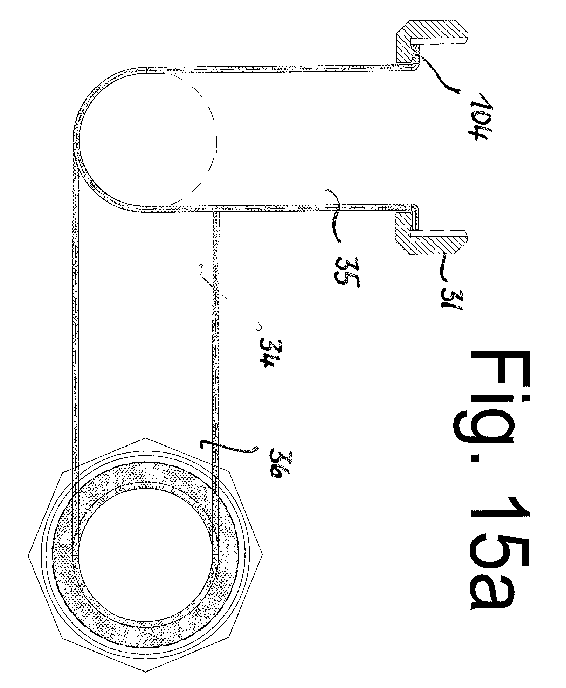

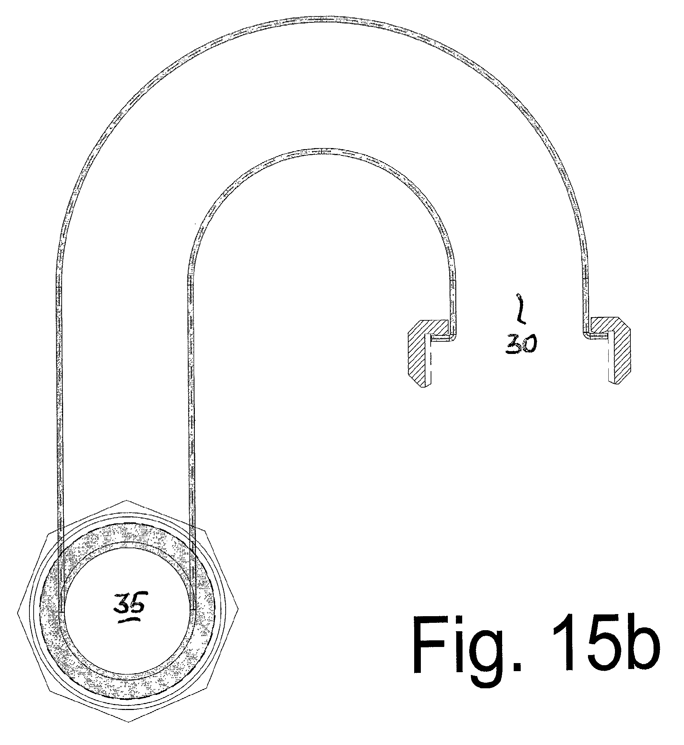

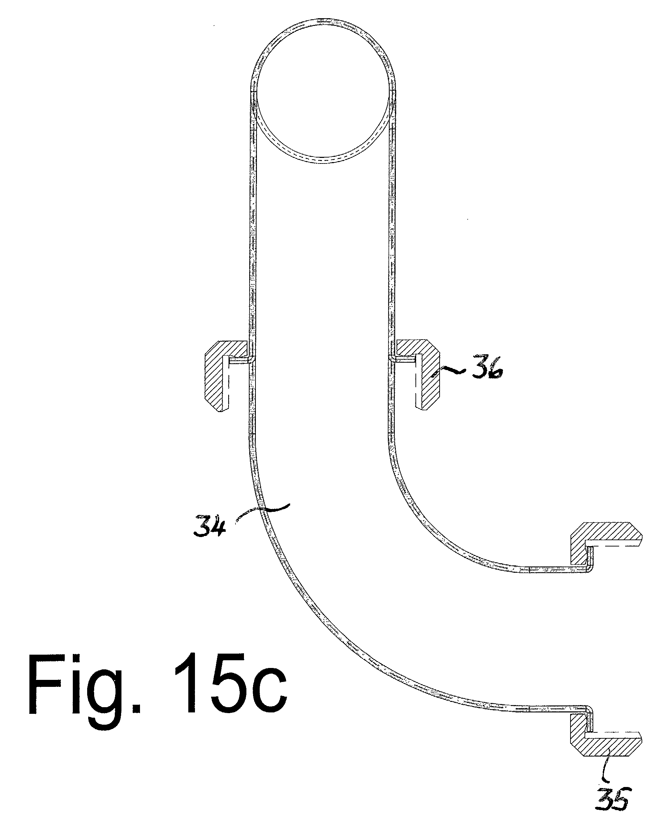

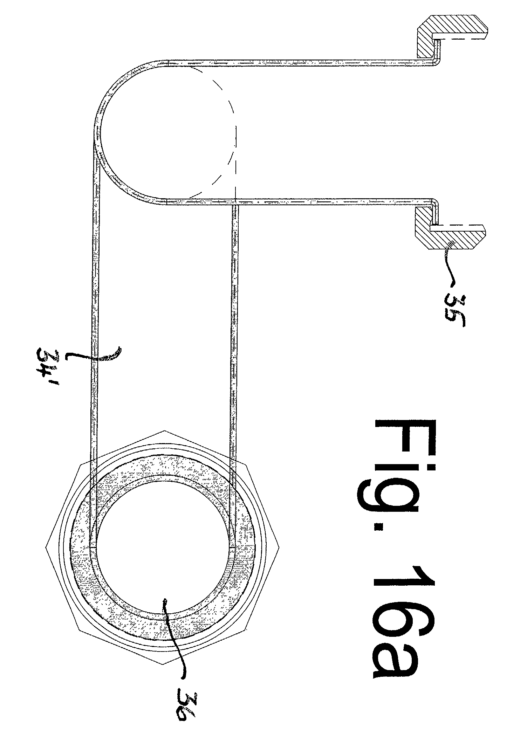

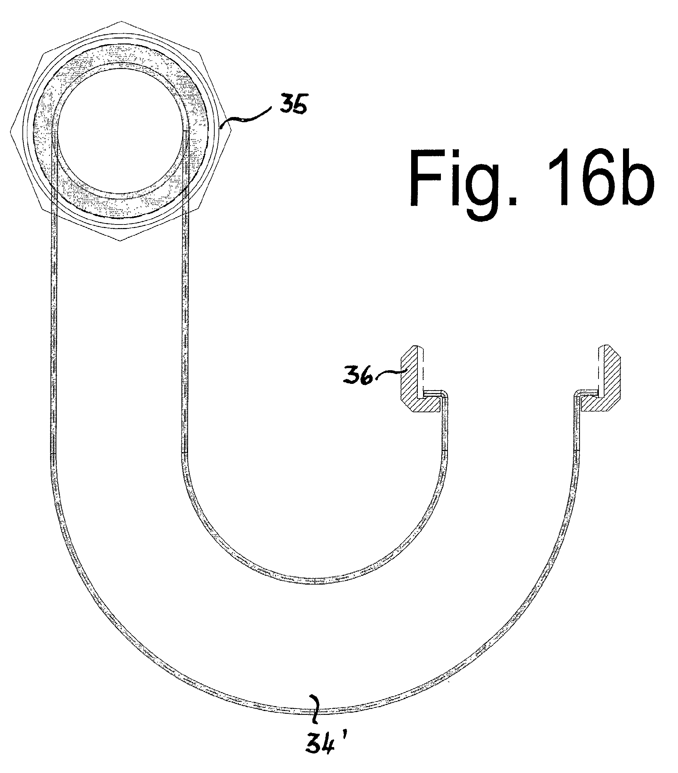

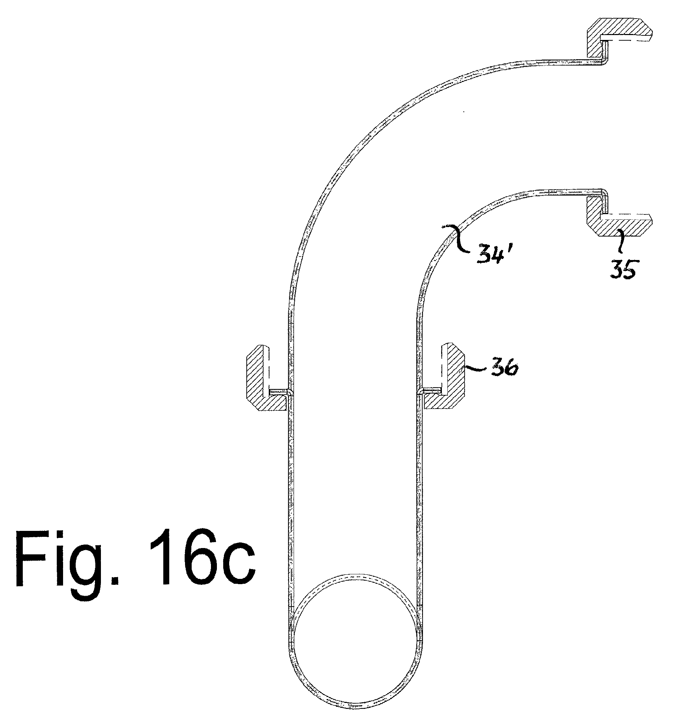

Das Rohr nach den Fig. 15a bis c ist das Rohr 34 in unterschiedlichen Ansichten, das Rohr nach Fig. 16a bis c ist das Rohr 34' das jeweils zu dem Rohr 34 gespiegelt gekrümmt ist.

Es existieren noch zwei gerade aber identische Kurzrohre 112 und 113, die an speziellen Positionen zum Einsatz kommen.

Durch die speziellen Ausgestaltungen der Rohre 34, 39 und 49 gelingt es, alle in einer vorzugsweise senkrecht zu einer Gebäudewand in einer senkrechten Ebene stehenden Rohrenden 22 bis 27 in das Gehäuse 41 des Mehrwegemischventiles 40 einzuführen. Sämtliche Rohre 28, 34, 39, 44, 45, 46, 47, 49, 28, 112, 113 sowie 34', 44', 45' bilden zusammen ein Rohrset, das auch Untergruppen aufweisen kann, also nur aus Teilen der Rohre bestehen kann.

Es ist besonders vorteilhaft, den Stellmotor 42 des Mehrwegemischventiles 40 von einer nicht dargestellten Zeitsteuerung bewegen zu lassen, die den Stromfluss im Kabel 64 zeitvariabel steuert: Somit lässt sich erreichen, dass das Mehrwegemischventil 40 während der Nacht, in der keine Wärme von dem von der Wärmequelle beheizten Hause benötigt wird, geschlossen ist. Ist Wärmelieferung ab zum Beispiel 6.00 Uhr morgens notwendig, so werden von der Zeitsteuerung mit einer zur ausreichenden Schnellaufheizung ausreichenden Vorlaufzeit die zweite Wärmesenke 58 mit Wärme beliefert. Das Mehrwegemischventil wird hierzu vom Stellmotor in eine Stellung gebracht, in der der der Anschluss 7 mit dem Anschluss 1 verbunden wird, der Vorlauf der Wärmequelle 56 mit dem Vorlauf der zweiten Wärmesenke 58 verbunden ist. Der Rücklauf zur Wärmequelle 56 erfolgt über den Kanal 12 des Mehrwegemischventiles 40 und dessen Bauch 5. Hierzu kann von der Zeitsteuerung eine der beiden Pumpen 68 oder 74 stillgesetzt werden. Das Rohr 28 ist hierbei nicht durchströmt.

Ist die Fussbodenheizung entsprechend der zweiten Wärmesenke 58 ausreichend warm, wird nach Anlauf der hierzu benötigten Zeit das Mehrwegemischventil 40 in eine von vier möglichen nächsten Stellungen während der mittleren Tageszeit vom Stellmotor 42 gefahren, in denen beide Wärmesenken 57 und 58 in Serie geschaltet sind. Hierbei steht das Küken bei den beiden ersten Varianten in einer Stellung, in der die Anschlüsse 6 und 7 mit dem Anschluss 1 und mit der Kükenbohrung verbunden sind. Je nach Wärmeanforderung kann über eine Leistungsvariation der Pumpen 68 und 74 durch die Wärmesenke 58 mehr oder weniger Heizmittelfluid durchgesetzt werden als durch die Wärmesenke 57. Die Differenz strömt über das Rohr 28 in der einen oder anderen Richtung. Bei den beiden zweiten Varianten steht das Küken in einer Stellung, in der die Anschlüsse 6 und 9 mit dem Anschluss 1 und mit der Kükenbohrung verbunden sind. Hier gilt das gleiche für die Heizmitteldurchsätze durch die beiden Wärmesenken und somit für die Tatsache der Durchströmung und der Strömungsrichtung durch das Rohr 28.

Gegen Ende des Tages wird die letzte Kükenstellung vom Stellmotor angefahren, bei der lediglich der Anschluss 9 mit dem Anschluss 1 verbunden ist und somit nur die erste Wärmesenke 57 von der Wärmequelle 56 beheizt ist. Das Rohr 28 ist hierbei nicht durchströmt.

Die Zeitdauern für die die einzelnen Stellungen eingehalten werden, hängen von den Wärmeanforderungen der Wärmesenken ab, die durch Temperaturfühler vorgegeben werden.

Dies gilt auch für die Auswahl der jeweiligen drei zeitlichen Stellungen des Ventilkükens während der mittleren Tageszeit.

Während der Entwicklung der vorliegenden Erfindung war festzustellen, dass der Versuch, alle Tore (drei Zugangstore und ein Abgangstor) des Mehrwegemischventiles 40 in einer Ebene zusammenzuführen, dazu führte, dass die verbleibenden Querschnitte im voll geöffneten Zustand gegenüber der Rohrnennweite der verwendeten Rohre stark eingeschränkt werden müssen. Dies ist aber in Bezug auf die Funktion nachteilig, da das Mehrwegemischventil 40 auf möglichst kleinem Raum große Volumenströme steuern können sollte. Darüber hinaus stellt die Integration von einer Kreuzung und vier Verzweigungen in der umgebenden Rohrgruppe auf möglichst engem Raum eine aufwendige Aufgabe dar. Die beschriebene Konstruktion ermöglicht nicht nur die Realisierung grosser Nennweiten und Durchflusswerte. Sie ist darüber hinaus in mehrfacher Hinsicht kostengünstig und montagefreundlich.

Um möglichst weite Rohrquerschnitte auf engstem Raum bei gleichzeitiger Realisierung des geforderten Steuerverhaltens nach der folgenden Tabelle aus der DE 198 21 256 C1

| | | | | | |
|---|---|---|---|---|---|
| Lastfall | Vollast | Starklast | Grenzlast | Schwachlast | Leerlauf |
| Eingang 1 | offen | teilw. offen | geschlossen | geschlossen | geschlossen |
| Eingang 2 | geschlossen | teilw. offen | offen | teilw. offen | geschlossen |
| Eingang 3 | geschlossen | geschlossen | geschlossen | teilw. offen | offen |
| Stellung | Endpunkt I | Bereich I | Mittel punkt | Bereich II | Endpunkt II |

verwirklichen zu können, ist es erfinderisch ideal, das Mehrwegemischventil 40 als Hahn und das Küken mit einem Eckdurchgang zu konstruieren. Der Übergang vom meist kreisförmigen Rohrquerschnitt zu einer viereckigen, insbesondere parallelogramm-, trapezförmigen oder rechteckigen Torform ist von Vorteil, weil die Konturenbewegung der Tore auf der Mantelfläche in der Abwicklung einer geradlinigen Verschiebung (Translation) gleichkommt. Die zur Verfügung stehende Fläche wird auf dem abgewickelten Flächenband durch Rechtecke (zylindrische Bohrung) oder Trapeze (kegelförmige Bohrung) am besten ausgenutzt. Ein weiterer Vorteil dieser Flächenform ist das bezogen auf den Kükenstellwinkel lineare Wachstum (bzw. die lineare Schrumpfung) der Überschneidungsflächen, was zu einer annähernd linearen Ventilkennlinie führt. Gerade im Übergangsbereich des Beimischens, bei dem die gewünschte Temperatur sehr nahe an einer der beiden zur Verfügung stehenden Temperaturen liegt und in dem es zu extrem von 1÷1 verschiedenen Mischungsverhältnissen kommt, ist es jedoch von Vorteil, die Kennlinie so zu gestalten, dass sie anfangs erst langsam und stetig ansteigt, bis sie den linearen Bereich erreicht, in dem der Anstieg nahezu konstant ist. Aus diesem Grund ist es weiterhin von Vorteil, in den Kanten der Torkonturen, die annähernd oder genau zur Kükenachse parallel liegen, seitlich schmalere und/oder spitz winkelige Ausstellungen vorzusehen, die bei einer Verschiebung der Konturen gegeneinander zu einem Anstieg der Überschneidungsfläche in der beschriebenen Weise führen. Eine besonders vorteilhafte Form des Anstieges in diesem Bereich stellt eine sogenannte gleichprozentige (logarithmische) Kennlinie dar, die durch einen exponentiellen Randverlauf (exponentielle Hüllfunktion) erreicht wird.

Durch die besondere Bauart des Mehrwegemischventiles 40 mit seinen drei Zuläufen "heiss" (E1), "warm" (E2) und "kalt" (E3) ist deren Reihenfolge festgelegt, denn "warm" muss immer zwischen "kalt" und "heiss" liegen. Soll mit dem gleichen Gehäuse 41 des Mehrwegemischventiles 40 eine rechts/links - Vertauschung der Anschlüsse heiss und halt erreicht werden, was installationsseitig von Vorteil sein kann, so kann dies nur geschehen, wenn eine Verdrehung der Armatur einer Spiegelung entspricht, was der Forderung gleichkommt, dass das Gehäuse 41 selbst symmetrisch zu einer Ebene sein muß, die von der Kükenachse und einer Zulaufachse aufgespannt wird. Vorteilhaft ist es weiterhin, die Zuläufe in der Mantelfläche der Kükenbohrung gleichmässig zu verteilen, um jeder einzelnen ein Maximum an Raum zur Verfügung zu stellen, was zu einer 120°-Symmetrie führt.

Aufgrund der ebenfalls im genannten Patent DE 198 21 256 C1 beschriebenen Baugruppe aus zugehörigen Rohrleitungen muss am kalten Zulauf (E3) des Mehrwegemischventiles 40 immer ein Bypass zum Wärmequellenrücklauf angebracht werden. Da sich die beschriebene 120°-Symmetrie nur schwierig in die ansonsten rechtwinkligen Installationsverhältnisse integrieren lässt, bietet es sich an, diesen Bypass in Form eines Bogens im Kanal 12 an der senkrecht dazu liegenden Kükenbohrung vorbeizuführen, so dass sich das Zugangstor tangential bei der Durchdringung des Teils der Rohrwand, die die Bogenaussenwand darstellt und der Kükenbohrung ergibt. Dadurch entfällt eine Verzweigung in der Rohrgruppe und das Mehrwegenmischventil 40 erhält vier Zulaufanschlüsse, die dann idealerweise rechtwinklig und darüber hinaus quadratisch, das heisst mit jeweils gleichem Abstand zu Kükenachse, auslaufen.

Um weiterhin die oben bereits beschriebene rechts/links-Vertauschbarkeit durch eine Mischerdrehung zu ermöglichen, muss die Symmetrieebene 13 durch die Kükenachse und die Achse senkrecht zum Zugangstor dieses sogenannten Tangentialzulaufes aufgespannt werden.

Damit der Bypass im geschlossenen Zustand des Tangentialtores nicht zu eng ist, muss in der Kehle des Bogens, das heisst in dem Teil der Rohrwand des Bypasses, der die Innenwand des Bogens darstellt, eine möglichst zur Kükenachse koaxiale Wölbung (Bauch 5) angebracht sein, so dass das das geschlossene Küken umströmende Medium durch einen möglichst konstanten Querschnitt fliesst.

Insgesamt ist es für die Montage von großem Vorteil, wenn diese auf einer Wand erfolgen kann, also alle Rohrleitungen, sowohl innerhalb, als auch ausserhalb der genannten Baugruppenabgrenzung, in einer Ebene liegen. Dies erfordert umgekehrt, dass auch alle Verbindungen zwischen dem Mehrwegemischventil 40 und der inneren Rohrgruppe (Verteilergruppe) in einer Ebene liegen müssen, was wiederum erfordert, dass alle Zu- und Abgänge des Mehrwegemischventiles 40 auf die Verteilergruppe gerichtet sein und darüber hinaus in dieser Trennebene enden müssen.

Die beschriebenen Ausführungsbeispiele führen zu folgendem Ergebnis:

Die Wärmequelle 57 wird mit ihrem Vorlauf an das Rohr 22 angeschlossen. Über das T-Stück 61 gelangt heisses Vorlaufwasser in den Winkel 6 und den Zulauf 10 bis zum Tor 4 des Mehrwegemischventiles 40. Weiter gelangt heisses Vorlaufwasser über einen der Rückflussverhinderer 29 in das Rohr 24 und damit in den Vorlauf des Direktheizkreises der ersten Wärmesenke 57. Ein weiterer Rückflussverhinderer 29 in dem Winkel 6 verhindert die Rücksaugung von Rücklauf- oder Mischkreiswasser.

Aus der ersten Wärmesenke 57 strömt Rücklaufwasser über das Rohr 25 in den Verteiler. Es gelangt über den dritten Rückflussverhinderer 29 in den Winkel 7, den Zulauf 11 und das Zugangstor 3 des Mehrwegemischventiles 40. Der dritte Rückflussverhinderer 29 verhindert die Rücksaugung von Vorlauf- oder Mischkreiswasser. Eine eventuelle Differenz zwischen dem Durchsatz des aus dem Direktheizkreis der ersten Wärmesenke 57 heranfliessenden Rücklaufwassers und der Entnahme durch den Winkel 7, den Zulauf 11 und das Tor 3 des Mehrwegemischventiles 40 wird durch den Bypass 28 ausgeglichen, der in beiden Richtungen durchströmt werden kann.

Durch das Küken 16, genauer durch seinen radiale Einlass 17, strömt Wasser über den axialen Anschluss 1 des Kükenabganges in den Vorlauf der zweiten Wärmesenke 58. Aus dem Mischkreis dieser Senke 58 strömt Rücklaufwasser über das Rohr 27 in den Winkel 8 und den Tangential-Bogen 12 am Zugangstor 2 vorbei in Richtung des Winkels 9 und zum Wärmequellenrücklauf 23. Hier findet über den Bypass 28 die Entnahme bzw. Abgabe von fehlendem oder überschüssigem Wasser aus dem Heizkreis-Rücklauf der ersten Wärmesenke 57 statt.

Die Zuläufe 10, 11 und die beiden Schenkel des Tangentialbogens 12 laufen rechtwinklig zueinander aus und sind gleich lang. Die Winkel 6, 7, 8 und 9 sind ebenfalls alle gleich lang, in die Richtung des Abgangs 1 der Kükenachse gerichtet und enden in einer Ebene. Die drei Achsen 13, 15 und 14 der Zugangstore 2, 3 und 4 stehen in dem optimalen Winkel von 120° zueinander und symmetrisch zur Achse 13, die gleichzeitig mit der Kükenachse die Symmetrieebene des gesamten Mehrwegemischventiles 40 bildet. Das Küken 16 kann über einen Stellbereich von 240° vom Tor 2 über das Tor 3 nach dem Tor 4 vom Stellmotor 42 gefahren werden, wodurch die in Tab. 1 beschriebene Steuerfunktionen ausgeübt werden. Durch die an Rechtecke angenäherten Torformen 2, 3, 4 und 17 mit seitlich ausgestellten Bereichen mit annähernd exponentiellem Anfangsverlauf wird erreicht, dass sowohl ein Maximum an Querschnittsflächen zur Verfügung steht, als auch bei kleinen Beimischungen eine gleichprozentige Kennlinie entsteht. Die Breite eines Tores beträgt auf den Winkelumfang von 360° bezogen etwa 110°, so dass eine Trennwand von etwa 10° zwischen den Toren erhalten bleibt. In der Kehle des Tangentialbogens 12 befindet sich der zur Kükenachse 1 koaxiale Bauch 5 der Bogeninnenwand, so dass der Querschnitt der Umleitung im Bogen 12 bei geschlossenem Küken 16 annähernd konstant ist.

Durch die innere Symmetrie des Mehrwegemischventiles 40 kann der gesamte Verteiler gespiegelt werden (Rechts/Links-Tausch), in dem das Gehäuse 41 des Mehrwegemischventiles 40 um 90° verdreht wird. In diesem Fall strömt heisses Vorlaufwasser über den Winkel 7 und den Zulauf 11 bis an das Tor 3, warmes Rücklaufwasser der ersten Wärmesenke über den Winkel 6 und den Zulauf 10 an das Tor 4 und kaltes Rücklaufwasser der zweiten Wärmesenke 58 über den Winkel 9 und den Tangentialbogen 12 am Tor 2 vorbei über den Winkel 8 zum Wärmequellenrücklauf. Der 240°-Stellbereich des Kükens 16 läuft jetzt vom Tor 2 über das Tor 4 zum Tor 3 und zurück.

Die O-Ringe 18 und 20 dichten über definierte und feste Nutbreiten den Deckel 21 gegen die Kükenbohrung 75 des Gehäuses 41 des Mehrwegemischventiles 40 und die Kükenwelle ab. Die Nuttiefe ist jedoch geringer, als die Stärke der verpressten O-Ringe, so dass das Küken 16 im eingebauten Zustand in axialer Richtung gegen die O-Ringe gepresst wird, und zwar durch eine leichte Vorspannung, die über die Kükenwelle oder das Gehäuse des Mehrwegemischventiles 40 aufgebracht wird. Dadurch entsteht ein gegenüber dem System und dem Aussenraum abgedichteter Bereich 19, der idealerweise mit einem Fettdepot aufgefüllt wird.

Diese Konstruktion hat zwei wesentlich Vorteile: Erstens werden mit zwei O-Ringen zwei Abdichtungen (Gehäuse/Deckel und Deckel/Welle) und ein Fettdepot erreicht (bisher waren dafür drei Dichtungen erforderlich) und zweitens wirkt der Systeminnendruck über den Wellenquerschnitt als Kraft auf die O-Ringe und damit dichtungserhöhend. Da diese Bewegung schwimmend ist, gleicht sie Materialermüdung und Abrieb der O-Ringe aus. Diese Vario-Nut Konstruktion lässt sich auch mit der Tellerfeder in der Vorspannung kombinieren.

Die Übergänge zwischen den Rohren und dem Gehäuse 41 des Mehrwegemischventiles 40 sind durch flachdichtende Verschraubungen mit Bördelflanschen 33 und Überwurfmuttern 31 gelöst. Sofern eingelegte Rückflussverhinderer 29 zum Einsatz kommen, werden diese direkt in die Rohre eingelogt und durch eine Aussennut gegen Verrutschen fixiert. Im als Gusskörper ausgestalteten Gehäuse 41 des Mehrwegemischventiles 40 befindet sich eine entsprechende Bohrung. Kommt ein einlegter Rückflussverhinderer 29 im freien Rohr zum Einsatz, so wird er beidseitig zwischen die Bördelflansche der Rohre eingelegt und durch Aussennuten fixiert, wobei der Abstand zwischen dem Flansch und der Nut bei beiden Enden gleich ist, was geringere Werkzeugkosten verursacht. In diesem Fall wird eine Überwurfschraube 32 eingesetzt.

## Patentansprüche

1. Rohrset ( 117 ), bestehend aus mehreren Rohren ( 28, 39, 44, 45, 46, 47 und 49 ) zur Verbindung von Anschlüssen ( 1, 6, 7, 8, und 9 ) eines Mehrwegemischventiles ( 40 ) mit einem Ventilgehäuse ( 41 ) und wenigstens je einem Strömungsmittelein- ( 6, 7, 9, ) und -auslass ( 1, 8), die über ein im Gehäuse ( 41 ) gelagertes Ventilküken ( 16 ) verbindbar sind, mit Rohren einer Wärmequelle ( 56 ) und zweier Wärmesenken ( 57, 58 ), welche Rohre in äquidistanten Abständen an einer Wand nebeneinander verlaufen, **dadurch gekennzeichnet, dass** sämtliche Rohre im Bereich der Anschlüsse an das Ventilgehäuse des Mehrwegemischventiles eine 90°-Umlenkung aufweisen, dass die zur Wärmequelle ( 56 ) und der ersten Wärmesenke ( 57 ) führenden Rohre ( 47, 49 bzw. 39, 46 ) geradlinig ausgebildet sind, während die zur zweiten Wärmesenke führenden Rohre ( 44, 45 ) eine weitere zusätzliche senkrecht zur 90°-Umlenkung verlaufende Biegung ( 116 ) aufweisen.

2. Rohrset nach Anspruch 1, **dadurch gekennzeichnet, dass** zusätzlich ein u-förmiges Bypassrohr ( 28 ) vorgesehen ist, das im Bereich der 90°-Umlenkungen in die Rücklaufrohre ( 46 und 47 ) von der Wärmequelle ( 56 ) und der ersten Wärmesenke ( 57 ) mündet.

3. Rohrset nach Anspruch 1, **dadurch gekennzeichnet, dass** die mit der zusätzlichen Biegung versehenen Rohre ( 44 und 45 ) in der Biegung oder der 90°-Umlenkung spiegelbildlich versetzt ausgestaltet sind.

4. Rohrset nach Anspruch 2, **dadurch gekennzeichnet, dass** zusätzlich ein weiteres u-förmiges, mit ungleichen Schenkeln versehenes, zu einer Pumpe ( 74 ) führendes Rohr ( 34 ) vorgesehen ist, das zu einem Anschluss ( 8 ) des Gehäuses ( 41 ) des Mehrwegemischventiles ( 40 ) und zum Vor oder Rücklaufrohr der zweiten Wärmesenke ( 58 ) führt.

5. Rohrset nach Anspruch 4, **dadurch gekennzeichnet, dass** das weitere u-förmige Rohr ( 34 ) mit einer 90°-Umlenkung am Anschluss ( 8 ) des Mehrwegemischventiles ( 40 ) versehen ist.

6. Rohrset nach einem der Ansprüche 1 bis 4, **dadurch gekennzeichnet, dass** gleiche Rohre ( 39, 112 ) mehrfach verwendet sind.
